Europäisches Patentamt

(19) European Patent Office

Office européen des brevets

(11) Numéro de publication: **0 280 608**
**A1**

## (12) DEMANDE DE BREVET EUROPEEN

(21) Numéro de dépôt: **88400297.3**

(22) Date de dépôt: **09.02.88**

(51) Int. Cl.⁴: **G 09 B 21/00**

(30) Priorité: **20.02.87 FR 8702243**

(43) Date de publication de la demande:
**31.08.88 Bulletin 88/35**

(84) Etats contractants désignés:
**BE DE ES GB IT LU NL**

(71) Demandeur: **Simonin, Marcel**
**30 rue Alfred Leblanc**
**F-91220 Bretigny s/Orge (FR)**

(72) Inventeur: **Simonin, Marcel**
**30 rue Alfred Leblanc**
**F-91220 Bretigny s/Orge (FR)**

(74) Mandataire: **Fruchard, Guy et al**
**CABINET BOETTCHER 23, rue la Boétie**
**F-75008 Paris (FR)**

(54) **Dispositif d'affichage de signes en relief, notamment de caractères Braille.**

(57) Le dispositif selon l'invention comporte une tête d'affichage unique (1) comportant une matrice d'organes d'affichage (2) mobiles entre une position rétractée et une position en saillie par rapport à une face de référence (3) de la tête d'affichage, des moyens (4, 7) pour déplacer de façon séquentielle les organes d'affichage (2) afin d'afficher des séries de caractères successifs selon au moins une cadence d'affichage, des moyens (7) pour répéter l'affichage de chaque série de caractères successifs, et des moyens (15) pour interrompre l'affichage d'une série de caractères et procéder à l'affichage d'une série suivante de caractères.

EP 0 280 608 A1

## Description

Dispositif d'affichage de signes en relief, notamment de caractères Braille.

La présente invention concerne un dispositif d'affichage de signes en relief, notamment, bien que non exclusivement, des caractères de Braille.

On connaît déjà des terminaux d'ordinateur permettant d'afficher des messages en Braille à l'usage des non-voyants. Actuellement ces terminaux sont réalisés à l'aide d'une série de vingt ou vingt quatre matrices de six points disposés selon deux rangées de trois points afin de reproduire la représentation du Braille traditionnel au moyen d'organes d'affichage mobiles entre une position rétractée et une position en saillie, de l'ordre de 0,5 à 1 mm environ, par rapport à une face de référence des têtes d'affichage. Dans ces terminaux, un mot complet est affiché à chaque fois. Après avoir détecté le mot en déplaçant son index le long des différentes têtes d'affichage, l'utilisateur déclenche l'affichage du mot suivant afin de poursuivre sa lecture.

Cette technique se prête difficilement à la réalisation de terminaux simples et peu coûteux, de faible volume, compatibles avec les micro-ordinateurs de faible prix qui sont maintenant à la disposition de tous. En effet, la complexité mécanique et électronique due au grand nombre de points à commander entraîne forcément un coût important, de l'ordre de 5 à 10 fois celui d'un micro-ordinateur domestique. De plus, ces appareils sont le plus souvent dédiés à une application particulière et ne permettent pas l'utilisation des logiciels actuellement commercialisés.

Un but de la présente invention est de proposer un dispositif d'affichage de signes en relief de structure simple et peu encombrante compatible avec la plupart des micro-ordinateurs existants ainsi qu'avec certains logiciels commercialisés, et d'un coût réduit.

En vue de la réalisation de ce but, on prévoit selon l'invention un dispositif d'affichage de signes en relief comprenant une tête d'affichage unique comportant une matrice d'organes d'affichage mobiles entre une position rétractée et une position en saillie par rapport à une face de référence de la tête d'affichage, des moyens pour déplacer de façon séquentielle les organes d'affichage afin d'afficher des séries de caractères successifs selon au moins une cadence d'affichage, caractérisé par des moyens pour répéter automatiquement l'affichage de chaque série de caractères successifs, et des moyens pour interrompre l'affichage d'une série de caractères et procéder directement à l'affichage d'une série suivante de caractères.

Ainsi, dans le cas d'un affichage de caractères en Braille, chaque mot, qui est délimité dans tout signal d'ordinateur par les espaces qui l'encadrent, est affiché caractère par caractère sur la tête d'affichage unique et est répété jusqu'à ce que l'utilisateur en ait assuré la lecture et passe alors au mot suivant. De plus, si l'utilisateur a reconnu le mot avant l'affichage de tous les caractères le composant, il a la possibilité de passer immédiatement au mot suivant sans attendre l'affichage de la fin du mot qu'il a reconnu.

Selon une version avantageuse de l'invention, le dispositif d'affichage comporte des moyens pour interrompre l'affichage d'une série de caractères et procéder à l'affichage d'une série précédente de caractères. Ainsi, si au cours de la lecture l'utilisateur est passé trop rapidement sur une série de caractères qu'il pense avoir reconnus et s'aperçoit ultérieurement qu'il a probablement effectué une mauvaise lecture, il a la possibilité de retourner en arrière et de procéder à nouveau à la lecture de la série de caractères désirés.

Selon un autre aspect avantageux de l'invention, le dispositif comporte au moins un moyen de mémorisation de plusieurs séries de caractères. Ainsi, le dispositif peut être chargé à l'avance avec plusieurs séries de caractères et l'ordinateur auquel il est raccordé est rendu disponible pour charger d'autres dispositifs d'affichage ou effectuer d'autres opérations.

Selon un mode de réalisation préféré de cet aspect de l'invention, le dispositif comporte au moins deux moyens de mémorisation de plusieurs séries de caractères et des moyens pour charger alternativement les moyens de mémorisation. Ainsi, lorsque l'on arrive en fin de lecture de l'un des moyens de mémorisation, on charge l'autre moyen de mémorisation avec la suite des caractères à lire, et il est donc constamment possible de revenir en arrière sur le texte contenu dans l'autre moyen de mémorisation.

Selon encore un autre aspect avantageux de l'invention, le dispositif comporte des moyens pour faire varier la cadence d'affichage des caractères. Ainsi, la lecture est aisément adaptée au niveau de lecture de l'utilisateur.

Selon un mode de réalisation plus particulièrement adapté à l'affichage de caractères en Braille, et comportant pour cela une matrice de six organes d'affichage disposés selon deux rangées de trois points, on prévoit selon l'invention deux organes d'affichage supplémentaires. Ainsi, on indique à l'utilisateur que le caractère affiché est, par exemple, une majuscule ou un chiffre sans qu'il soit nécessaire de procéder à l'affichage de plusieurs caractères de Braille successifs.

Selon un mode de réalisation préféré de cet aspect de l'invention, les deux organes d'affichage supplémentaires sont disposés sur un même côté de la matrice de points. Ainsi, la tête d'affichage reste compacte et l'ensemble des points est détecté sans qu'il soit nécessaire de déplacer le doigt qui assure la lecture.

Selon encore un aspect préféré de l'invention, la tête d'affichage comporte des nervures en saillie par rapport à la face de référence et s'étendant entre les organes d'affichage. Ainsi, l'utilisateur repère aisément la position des organes d'affichage qui sont en saillie par rapport à la face de référence.

Selon un mode de réalisation préféré de cet aspect de l'invention, les nervures en saillie ont une hauteur inférieure à une hauteur de saillie des organes d'affichage. Ainsi, la lecture des caractères affichés n'est pas gênée par la présence des nervures.

D'autres caractéristiques et avantages de l'invention apparaîtront encore à la lecture de la description qui suit d'un mode de réalisation particulier, non limitatif, de l'invention, en liaison avec les dessins ci-joints parmi lesquels :

- la figure 1 est une représentation schématique du dispositif selon l'invention, la tête d'affichage unique étant représentée en perspective très agrandie,

- la figure 2 est une vue en perspective d'une forme de réalisation du dispositif selon l'invention.

En référence aux figures, le dispositif d'affichage selon l'invention comporte une tête d'affichage unique 1 comportant une matrice d'organes d'affichage référencés 2.1 à 2.8. Ces organes d'affichage sont formés d'une aiguille mobile entre une position rétractée et une position en saillie par rapport à une face de référence 3 de la tête d'affichage. Les aiguilles d'affichage 2 sont par exemple déplacées par des électro-aimants 4 montés selon une structure analogue à la structure d'une tête d'imprimante à aiguille. Les aiguilles d'affichage 2 sont séparées les unes des autres par des nervures 5 réalisant un quadrillage permettant de repérer aisément la position d'une aiguille en saillie. De préférence, la hauteur h des nervures 5 est inférieure à la hauteur de saillie H des organes d'affichage 2. Par exemple, la hauteur de saillie H est d'environ 0,8 mm tandis que la hauteur h des nervures 5 est de l'ordre de quelques dixièmes de millimètres.

La tête d'affichage 1 est reliée à un amplificateur de puissance 6 relié à un microprocesseur 7 alimenté en électricité par un cordon d'alimentation 8. Le microprocesseur 7 est relié d'une part à une mémoire de programme et de codification de caractères 9 et d'autre part à une mémoire de stockage 10 elle-même divisée en deux parties de mémoire 10.1 et 10.2. Le microprocesseur 7 est également relié à un récepteur de liaison 11 lui-même relié par un commutateur 12 à une borne d'entrée 13 et une borne de sortie 14.

Le dispositif comporte en outre un interrupteur 15 pour la commande de l'affichage d'une série suivante de caractères, un interrupteur 16 de commande de l'affichage d'une série précédente de caractères et un organe de commande 17 de la vitesse d'affichage des caractères.

Le fonctionnement du dispositif selon l'invention est le suivant : la borne d'entrée 13 est reliée à la sortie d'un ordinateur (non représenté) et reçoit de celui-ci les signaux électriques habituels représentatifs des caractères à afficher. Par l'intermédiaire du récepteur de liaison 11 et sous la commande du microprocesseur 7, la première partie de mémoire 10.1 est chargée avec des séries de caractères et, lorsque cette partie de mémoire 10.1 est remplie, la transmission est bloquée et l'ordinateur est mis en attente selon la méthode habituelle pour la commande d'une imprimante. Le microprocesseur 7 prélève ensuite la première série de caractères formant un mot dans la partie de mémoire 10.1, convertit chacun des caractères de ce mot au moyen d'une table fournie par la mémoire 9 et envoie successivement les impulsions nécessaires vers l'amplificateur de puissance 6 pour la commande des aiguilles 2. En l'absence d'intervention de l'utilisateur, les caractères du premier mot, qui est facilement délimité lors du traitement en raison des signaux d'espaces qui l'encadrent, sont affichés successivement sur la tête d'affichage 1 à une cadence qui dépend du positionnement initial de l'organe de commande 17, l'affichage du mot se renouvelant automatiquement avec un léger espace pour séparer les affichages successifs.

Lorsque l'utilisateur a effectué la lecture du premier mot, ou même avant qu'il ait effectué la lecture complète du mot, s'il a pu en comprendre le sens dès l'affichage des premiers caractères, il actionne l'interrupteur d'avance 15 pour interrompre l'affichage du mot en cours et passer à l'affichage du mot suivant. Lorsque le microprocesseur atteint l'affichage du dernier mot de la partie de mémoire 10.1, il débloque la liaison avec l'ordinateur relié à la borne d'entrée 13 et procède au chargement de la seconde partie de mémoire 10.2 puis à sa lecture. Pendant toute la lecture de la partie de mémoire 10.2, la partie de mémoire 10.1 reste chargée avec le texte initial et il est donc possible à tout moment de remonter, au moyen de l'interrupteur 16, à des mots contenus dans la partie de mémoire 10.1. Lorsque l'affichage atteint le dernier mot de la partie de mémoire 10.2, la partie de mémoire 10.1 est chargée avec la suite du texte et la lecture s'effectue à nouveau sur la partie de mémoire 10.1 tandis que la partie de mémoire 10.2 reste accessible pour un retour en arrière. Les deux parties de mémoire 10.1 et 10.2 sont ainsi chargées puis lues alternativement jusqu'à la fin du texte. Suivant les difficultés que l'utilisateur rencontre pour effectuer la lecture, il fait varier la cadence d'affichage des caractères en agissant sur l'organe de commande 17.

Dans l'application particulière illustrée à un affichage en Braille, la tête d'affichage 1 comprend non seulement les aiguilles habituelles 2.1 à 2.6 disposées en matrice rectangulaire selon deux rangées de trois points mais également deux aiguilles additionnelles 2.7 et 2.8 servant à donner des informations complémentaires à l'utilisateur sans qu'il soit nécessaire d'effectuer l'affichage de deux caractères Braille successifs.

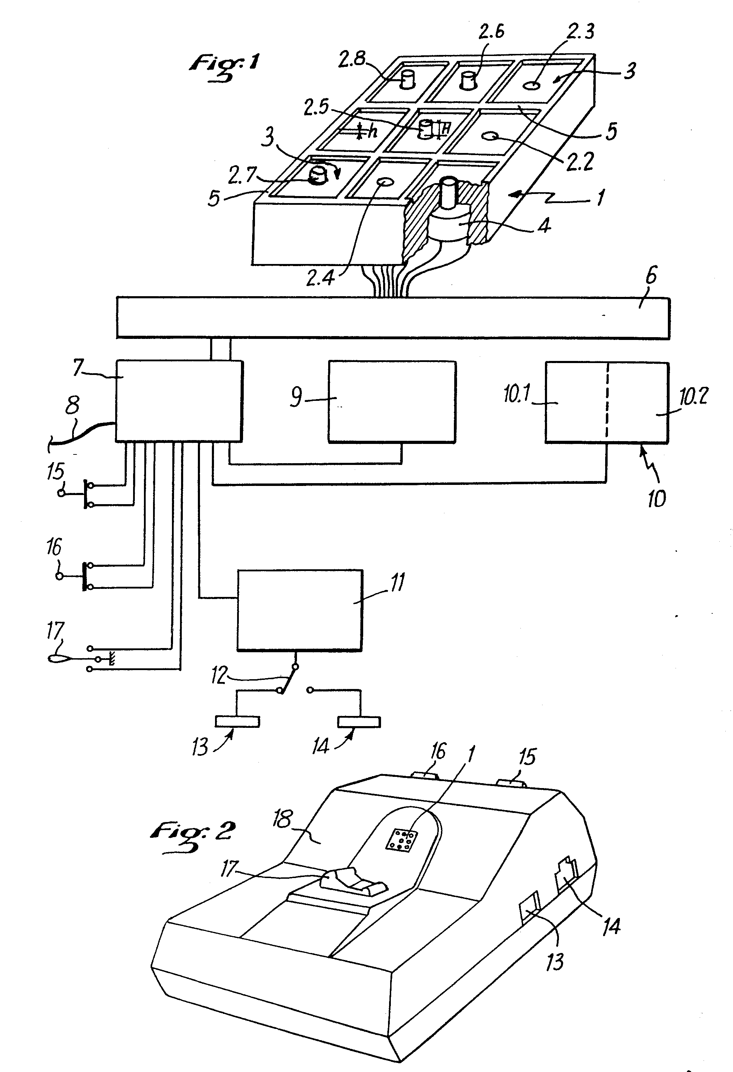

Par exemple, dans la position des aiguilles représentée sur la figure 1, les aiguilles 2.5, 2.6, 2.7 et 2.8 sont en saillie et correspondent, par un affichage unique, à l'affichage de deux caractères Braille destinés à représenter un B. On remarque que les deux aiguilles additionnelles 2.7 et 2.8 sont disposées d'un même côté de la matrice initiale 2.1 à 2.6 afin que la tête d'affichage 1 reste compacte et puisse être lue au moyen d'un seul doigt, généralement l'index, sans qu'il soit nécessaire de déplacer celui-ci.

Sur la figure 2 on remarque que la tête d'affichage 1 est montée sur une paroi inclinée du boîtier 18 qui comporte par ailleurs une paroi sensiblement horizontale sur laquelle est monté l'organe de commande 17. Cette disposition permet à l'utilisateur de prendre une position confortable et donc d'effectuer une lecture prolongée. Bien entendu, le boîtier 18 présente par ailleurs des caractéristiques esthétiques indépendantes des caractéristiques techniques présentées dans la présente demande.

Le commutateur 12 permet d'effectuer un basculement vers la borne de sortie 14 sur laquelle on peut brancher soit une imprimante classique pour faire des éditions permettant la vérification des programmes ou des textes mémorisés, soit une imprimante Braille permettant l'édition de documents à l'usage des non-voyants.

Bien entendu, l'invention n'est pas limitée au mode de réalisation décrit et on peut y apporter des variantes de réalisation sans sortir du cadre de l'invention. En particulier, la tête d'affichage peut comporter des organes d'affichage différents des aiguilles illustrées, par exemple des organes constituant des parties de motifs pouvant se combiner pour former des motifs différents suivant les organes d'affichage qui sont actionnés. De même, au niveau du fonctionnement, on peut prévoir des variantes de réalisation, par exemple on peut ajouter un interrupteur supplémentaire permettant d'effectuer un retour en arrière en début de phrase au lieu d'un retour en arrière sur le mot précédent. Au niveau des bornes d'entrée et de sortie, on prévoira de préférence des bornes compatibles avec celles qui équipent habituellement les ordinateurs pour la gestion d'une imprimante, plusieurs bornes montées en parallèle sur le dispositif pouvant être utilisées pour des raccordements à des systèmes de télétransmission différents.

## Revendications

1. Dispositif d'affichage de signes en relief comportant une tête d'affichage unique (1) comportant une matrice d'organes d'affichage (2) mobiles entre une position rétractée et une position en saillie par rapport à une face de référence (3) de la tête d'affichage, des moyens (4, 7) pour déplacer de façon séquentielle les organes d'affichage (2) afin d'afficher des séries de caractères successifs selon au moins une cadence d'affichage caractérisé en ce qu'il comporte des moyens (7) pour répéter automatiquement l'affichage de chaque série de caractères successifs, et des moyens (15) pour interrompre l'affichage d'une série de caractères et procéder directement à l'affichage d'une série suivante de caractères.

2. Dispositif d'affichage selon la revendication 1 caractérisé en ce qu'il comporte des moyens (16) pour interrompre l'affichage d'une série de caractères et procéder directement à l'affichage d'une série précédente de caractères.

3. Dispositif selon la revendication 1 ou la revendication 2 caractérisé en ce qu'il comporte au moins un moyen de mémorisation (10) de plusieurs séries de caractères.

4. Dispositif d'affichage selon la revendication 3 caractérisé en ce qu'il comporte au moins deux moyens (10.1, 10.2) de mémorisation de plusieurs séries de caractères et des moyens (7) pour charger alternativement les moyens de mémorisaton.

5. Dispositif selon l'une des revendications 1 à 4 caractérisé en ce qu'il comporte des moyens (17) pour faire varier la cadence d'affichage des caractères.

6. Dispositif d'affichage selon l'une des revendications 1 à 5 pour l'affichage de caractères de Braille comportant une matrice de six organes d'affichage (2.1 à 2.6) disposés selon deux rangées de trois points, caractérisé en ce qu'il comporte deux organes d'affichage (2.7, 2.8) supplémentaires.

7. Dispositif d'affichage selon la revendication 6 caractérisé en ce que les deux organes d'affichage supplémentaires sont disposés sur un même côté de la matrice de points.

8. Dispositif d'affichage selon l'une des revendications 1 à 7 caractérisé en ce que la tête d'affichage comporte des nervures (5) en saillie par rapport à la face de référence (3) et s'étendant entre les organes d'affichage (2).

9. Dispositif d'affichage selon la revendication 8 caractérisé en ce que les nervures en saillie ont une hauteur (h) inférieure à une hauteur (H) de saillie des organes d'affichage (2).

10. Dispositif selon l'une des revendications 1 à 9 caractérisé en ce que la tête d'affichage (1) est montée de façon inclinée.

0280608

*Fig. 1*

*Fig. 2*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | MACHINE DESIGN, vol. 58, no. 12, 22 mai 1986, page 52, Cleveland, Ohio, US; H.D. GARNER: "RAM reader drives braille pin pattern" * En entier * | 1,2,10 | G 09 B 21/00 |
| A | IDEM | 3-7 | |
| A | LE NOUVEL AUTOMATISME, vol. 24, no. 7, juin-juillet 1979, pages 31-35; J.P. DUBUS et al.: "Interpréteur-éditeur Braille automatique autonome avec clavier de machine à écrire" * En entier * | | |
| A | DE-A-3 400 093 (NIXDORF COMPUTER AG) * Résumé; figures * | 1-7 | |
| A | MICROPROCESSORS AND MICROSYSTEMS, vol. 8, no. 10, décembre 1984, pages 528-534, Butterworth & Co. (Publishers) Ltd, Guildford, Surrey, GB; R.W. KING et al.: "Realtime braille interface for Videotex interaction" | | DOMAINES TECHNIQUES RECHERCHES (Int. Cl.4)  G 09 B |

Le présent rapport a été établi pour toutes les revendications

| Lieu de la recherche | Date d'achèvement de la recherche | Examinateur |
|---|---|---|
| LA HAYE | 26-05-1988 | ODGERS M.L. |